# FASCICULE DE BREVET EUROPEEN

(11) **EP 4 211 381 B1**
(45) Date de publication et mention de la délivrance du brevet: **10.07.2024**
(21) Numéro de dépôt: 21748781.8
(22) Date de dépôt: 10.08.2021
(51) Int. Cl.: F16L 37/098, B60R 16/00, F16L 37/133, F16L 37/138, F16L 37/14, F16L 37/12

(54) **DISPOSITIF DE RACCORDEMENT ENTRE UN CONDUIT ET UNE EMBASE**
VERBINDUNGSVORRICHTUNG ZWISCHEN EINEM ROHR UND EINEM BODEN
CONNECTION DEVICE BETWEEN A PIPE AND A BASE

(30) Priorité: 09.09.2020 FR 2009125
(43) Date de publication de la demande: 19.07.2023
(73) Titulaire: A. Raymond et Cie, 38000 Grenoble (FR)
(72) Inventeur: CHAUPIN, Jérôme, 38830 CRET EN BELLEDONNE (FR); POGGI, Frédéric, 38600 FONTAINE (FR)
(74) Mandataire: IP Trust
(86) Numéro de dépôt international: PCT/EP2021/072298
(87) Numéro de publication internationale: WO 2022/053246

(56) Documents cités:
- EP-A1- 0 448 790
- DE-U1- 202009 002 682
- FR-A1- 2 715 454
- US-A1- 2005 230 968
- US-A1- 2008 012 314
- US-A1- 2018 216 769

## Description

### DOMAINE DE L'INVENTION

La présente invention concerne un dispositif de raccordement entre un conduit et une embase présentant un segment tubulaire muni d'un collet. Ce type de dispositif trouve tout particulièrement son intérêt dans le domaine de l'automobile, et plus particulièrement pour la connexion de conduits de fluides.

### ARRIERE PLAN TECHNOLOGIQUE DE L'INVENTION

Le document DE 20 2009 00 2682 U1 montre un dispositif de raccordement comportant un embout de connexion et une bague de retenue.

Les documents EP2759757, US2008048447, EP1781979, WO2019096596, EP0579194, US20180238479 divulguent de tels dispositifs de raccordement. Un verrou, de forme générale en C, vient se clipper autour d'un élément de connexion pour le maintenir assemblé à l'embase. Ces dispositifs peuvent présenter l'inconvénient de nécessiter un certain espace de manipulation pour déverrouiller la connexion, par exemple par appui manuel sur le front du verrou, afin d'écarter les branches de ce dernier et libérer l'élément de connexion de l'embase. Cela peut s'avérer peu pratique et rendre difficile cette opération, notamment lorsque l'élément de connexion est peu accessible. De plus, dans certains de ces dispositifs, le verrou ne reste pas nécessairement maintenu assemblé à l'élément de connexion lors du déverrouillage ce qui peut entraîner sa perte lors de l'opération de déconnexion.

### OBJET DE L'INVENTION

Un but de l'invention est de proposer un dispositif de raccordement se distinguant de l'état de la technique. Plus précisément, un but de l'invention est de proposer un dispositif simple à déverrouiller, et dans un espace de travail plus réduit que celui nécessaire au déverrouillage des dispositifs de raccordement de l'état de la technique.

### BREVE DESCRIPTION DE L'INVENTION

En vue de la réalisation de ce but, l'objet de l'invention propose un dispositif de raccordement entre au moins un conduit et une embase présentant un segment tubulaire surmonté d'un collet, le dispositif de raccordement comportant un embout de connexion destiné à relier fluidiquement le conduit à l'embase et une bague de retenue destiné à maintenir assemblés l'embout de connexion à l'embase :
- l'embout de connexion comprenant :
   - un corps tubulaire dont une première extrémité est destinée à s'engager, selon un axe principal, dans le segment tubulaire de l'embase, et dont une deuxième extrémité est destinée à se connecter au conduit ;
   - deux premiers éléments de retenue disposés en vis-à-vis l'un de l'autre;
- la bague de retenue comprenant :
   - un corps annulaire muni de deux deuxièmes éléments de retenue coopérant avec le premier élément de retenue pour retenir la bague de retenue sur l'embout de connexion ;
   - deux pattes de verrouillage solidaires du corps annulaire s'étendant selon l'axe principal, pour s'agripper au collet et maintenir la bague de retenue assemblée à l'embase, les deuxièmes éléments de retenue et les pattes de verrouillage étant angulairement espacés de 90°.

Selon d'autres caractéristiques avantageuses et non limitatives de l'invention, prises seules ou selon toute combinaison techniquement réalisable :
- la bague de retenue comprend des évidements détrompeurs pour orienter l'embout de connexion par rapport à la bague de retenue, lors de leur assemblage, et assurer l'alignement des premiers éléments de retenue et des deuxièmes éléments de retenue;
- chaque premier élément de retenue est flexible et chaque deuxième élément de retenue est rigide ;
- chaque premier élément de retenue est un bras flexible relié au corps tubulaire du côté de sa première extrémité et s'étendant le long du corps tubulaire, le bras flexible comprenant sur une surface extérieure un ergot coopérant avec le deuxième élément de retenue ;
- chaque deuxième élément de retenue est un épaulement formé sur une surface interne du corps annulaire ;
- chaque premier élément de retenue est rigide et chaque deuxième élément de retenue est flexible ;
- chaque deuxième élément de retenue est un bras flexible formé sur la bague de retenue, le bras flexible comprenant sur une surface interne un ergot coopérant avec le premier élément de retenue ;
- chaque premier élément de retenue est un épaulement formé sur une surface externe du corps tubulaire ;
- le dispositif de raccordement comporte également une pièce de blocage destinée à être insérée entre le corps tubulaire et le bras flexible ;
- la pièce de blocage présente une forme de cavalier en U comprenant :
   - une branche de blocage destinée à être insérée entre le bras flexible et le corps tubulaire ;
   - une branche de retenue munie d'un ergot pour se clipper sur le bras flexible ;
- la pièce de blocage comprend une branche d'appui formée dans le prolongement de la branche de fixation et destinée à déclipper, par appui, la branche de fixation du bras flexible ;
- la bague de retenue est munie d'une extension comprenant :
   - une première extrémité pour raccorder l'extension à la bague de retenue, la première extrémité comprenant un premier élément de retenue identique à celui de l'embout de connexion ;
   - une deuxième extrémité pour raccorder l'extension à l'embout de connexion, la deuxième extrémité comprenant un deuxième élément de retenue identique à celui de la bague de retenue ;
- le dispositif de raccordement comporte également un témoin visuel de bon montage mobile disposé entre la bague de retenue et l'embout de connexion, le témoin visuel de bon montage étant susceptible de coulisser axialement et/ou radialement lorsqu'il vient en contact contre le collet pour rendre visible une portion du témoin visuel de bon montage lorsque le dispositif de raccordement est correctement assemblé à l'embase ;
- le témoin visuel de bon montage est une bague munie de deux montants verticaux s'étendant axialement selon l'axe principal et comportant chacun une extrémité libre susceptible d'être exposée à travers une lumière formée dans la bague de retenue.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]
[Fig. 1b]
[Fig. 1c]
[Fig. 1d] Les figures 1a, 1b, 1c et 1d représentent les différentes étapes de la mise en oeuvre d'un dispositif de raccordement conforme à l'invention ;
[Fig. 2] La figure 2 représente une embase tri-voies à laquelle sont connectés trois dispositifs de raccordement conformes à l'invention ;
[Fig. 3a]

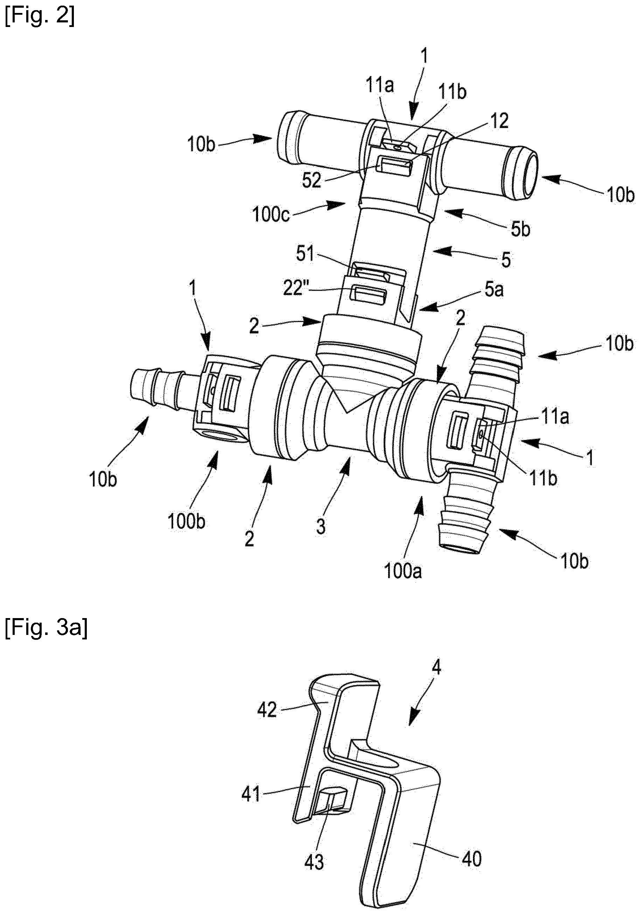

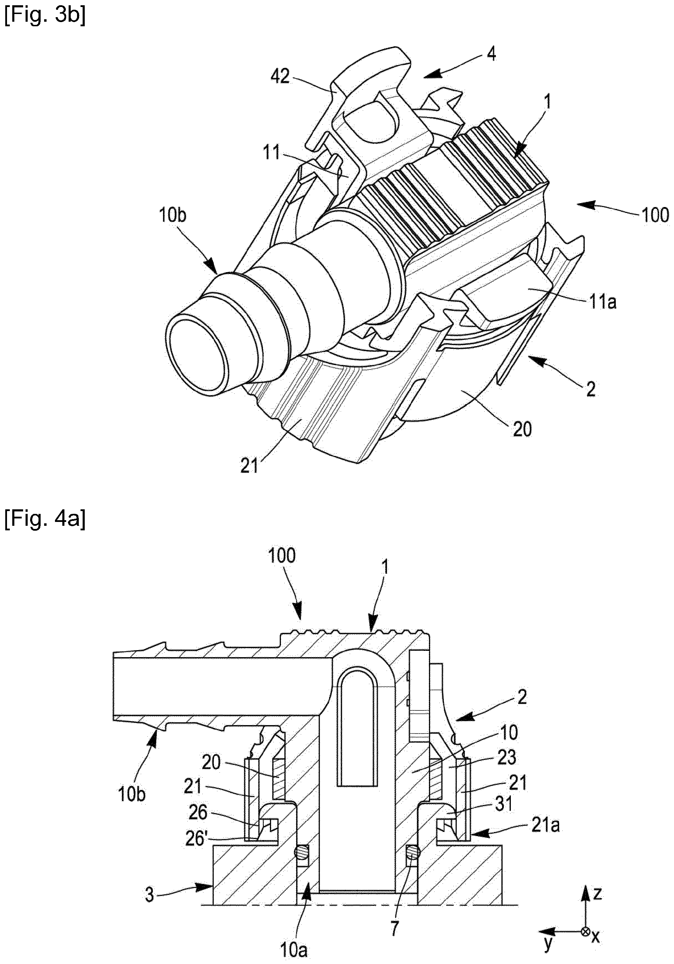

[Fig. 3b] Les figures 3a et 3b représentent une pièce de blocage pour un dispositif de raccordement conforme à l'invention, respectivement seule et assemblée audit dispositif;
[Fig. 4a]

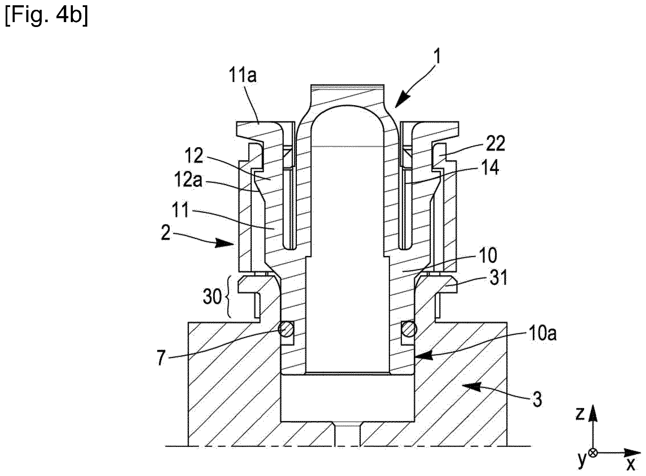

[Fig. 4b] Les figures 4a et 4b représentent respectivement une vue en coupe d'un dispositif de raccordement assemblé à une embase selon le plan (y,z) coupant les pattes de verrouillage de la bague de retenue, et selon le plan (x,z) coupant les bras flexibles de l'embout de connexion ;

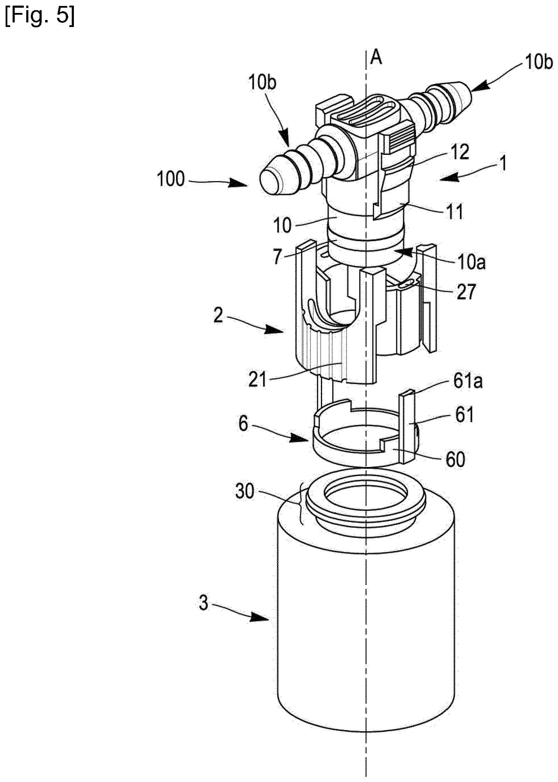

[Fig. 5] La figure 5 représente une vue éclatée d'un dispositif de raccordement muni d'un témoin visuel conforme à l'invention ;

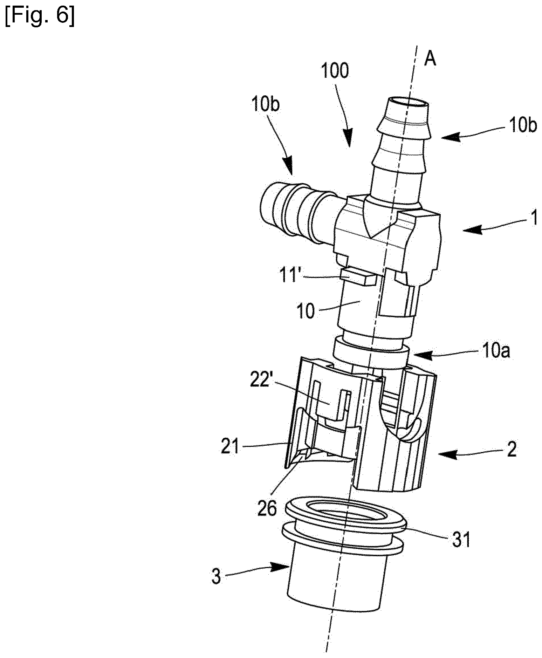

[Fig. 6] La figure 6 représente une vue éclatée d'un dispositif de raccordement conforme à un mode de réalisation alternatif de l'invention.

### DESCRIPTION DETAILLEE DE L'INVENTION

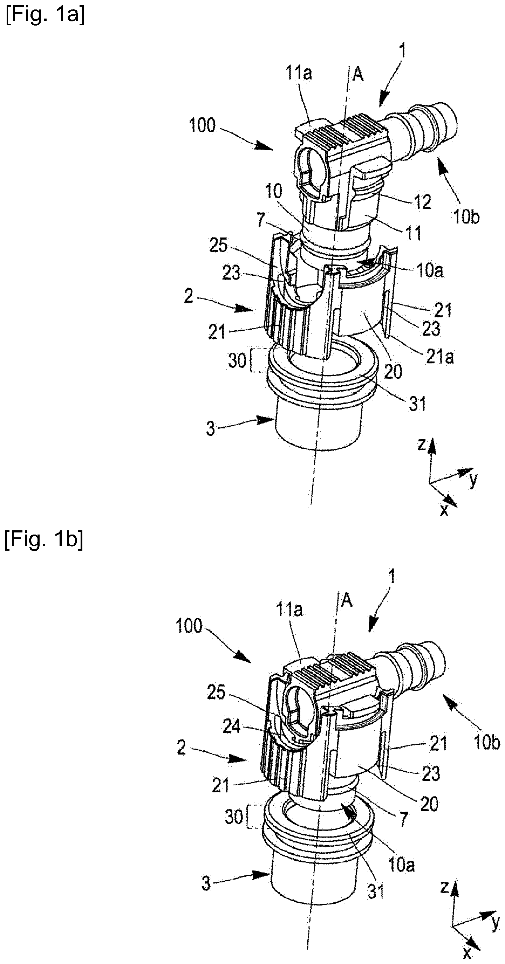

La figure 1a représente une vue d'ensemble éclatée d'un dispositif de raccordement 100 conforme à l'invention.

Le dispositif de raccordement 100 a pour but de raccorder un conduit (non représenté sur les figures) à une embase 3 présentant un segment tubulaire 30 surmonté d'un collet 31. Le dispositif de raccordement 100 comporte un embout de connexion 1 et une bague de retenue 2. L'embout de connexion 1 est destiné à relier fluidiquement le conduit à l'embase 3 et la bague de retenue 2 est quant à elle destinée à maintenir assemblé l'embout de connexion 1 à l'embase 3. La configuration de la connexion est de type femelle côté embase 3 et de type male côté embout de connexion 1.

De manière avantageuse, l'embout de connexion 1 et la bague de retenue 2 sont formés d'un matériau plastique tel que du PA6.6 GF30 (un mélange de nylon et de fibre de verre).

### Description du dispositif de raccordement

L'embout de connexion 1 comprend un corps tubulaire 10 comportant une première extrémité 10a et une deuxième extrémité 10b. La première extrémité 10a est destinée à s'engager, selon un axe principal A, dans le segment tubulaire 30 de l'embase 3 (figure 1b). La deuxième extrémité 10b, est destinée à se connecter au conduit et peut être de type « raccord sapin » ou « olivée ».

L'embout de connexion 1 peut présenter différentes géométries, notamment une forme coudée, comme les dispositifs de raccordement 100 des figures 1a à 1d, ou droite comme le dispositif de raccordement 100b de la figure 2 ou encore en « T » ou double coude comme les dispositifs de raccordement 100a,100c de la figure 2. L'embout de connexion 1 peut également comprendre une pluralité de deuxièmes extrémités 10b, selon les besoins de connexion, pour former un connecteur multivoie comme cela est visible sur la figure 2.

Le corps tubulaire 10 est également muni, sur sa première extrémité 10a, d'une rainure pour accueillir un joint d'étanchéité 7 afin d'assurer l'étanchéité de la connexion avec l'embase 3. Optionnellement, le corps tubulaire 10 peut être également muni, sur sa première extrémité 10a, d'une deuxième rainure pour accueillir un deuxième joint d'étanchéité pour former un double joint.

Afin de retenir l'embout de connexion 1 assemblé à la bague de retenue 2, et également permettre son désassemblage, l'embout de connexion 1 comprend au moins un premier élément de retenue 11,11'. Dans l'exemple avantageux illustré notamment sur les figures 1a à 1d, l'embout de connexion 1 comprend deux premiers éléments de retenue 11, ici deux bras flexibles 11, disposés en vis-à-vis l'un de l'autre, de part et d'autre du corps tubulaire 10. Ces bras flexibles 11 sont reliés au corps tubulaire 10, du côté de sa première extrémité 10a et s'étendent le long du corps tubulaire 10, dans la direction opposée à la première extrémité 10a. Les bras flexibles 11 comprennent sur leur surface externe un ergot 12 configuré pour coopérer avec la bague de retenue 2, de manière à la retenir assemblée à l'embout de connexion 1. Ces bras flexibles 11 sont avantageux en ce qu'ils limitent les efforts d'introduction de l'embout 1 dans la bague 2, facilitant ainsi leur connexion.

Avantageusement, l'extrémité libre 11a des bras flexibles 11 est coudée vers l'extérieur pour faciliter leur manipulation.

Les bras flexibles 11 peuvent être rapprochés du corps tubulaire 10, grâce à l'espace libre 14 entre le corps tubulaire 10 et les bras flexibles 11 (figure 4b), pour désengager l'ergot 12 de la bague de retenue 2 et ainsi déconnecter l'embout de connexion 1. Cette configuration procure un solution de déconnexion aisée de l'embout de connexion 1 vis-à-vis de la bague de retenue 2, sans augmenter l'encombrement du dispositif 100, puisque les bras flexibles 11 (ou premiers éléments de retenue 11) ne doivent pas s'écarter du corps tubulaire 10 mais s'en rapprocher pour réaliser la déconnexion.

Avantageusement, l'ergot 12 comprend un plan incliné 12a pour faciliter l'insertion de l'embout de connexion 1 dans la bague de retenue 2. Optionnellement, l'extrémité libre 11a peut être munie d'une ouverture 11b (figure 2) pour accueillir, par exemple, les extrémités d'une pince coudée pour faciliter le rapprochement des bras flexibles 11.

La bague de retenue 2 comprend un corps annulaire 20 et au moins une patte de verrouillage 21 flexible. Dans l'exemple avantageux illustré notamment sur les figures 1a à 1d, la bague de retenue 2 comprend deux pattes de verrouillage 21 flexibles disposées en vis-à-vis l'une de l'autre, de part et d'autre du corps annulaire 20.

La bague de retenue 2 s'étend globalement autour du corps tubulaire 10 de l'embout de connexion 1 et autour du collet 31 de l'embase 3, définissant sensiblement le volume d'encombrement de l'interface de connexion du dispositif de raccordement 100 sur l'embase 3.

Les deux pattes de verrouillage 21 sont solidaires du corps annulaire 20 et s'étendent selon l'axe principal A pour s'agripper au collet 31 et maintenir la bague de retenue 2 assemblée à l'embase 3. Il existe un espacement 23 (figure 4a) entre les pattes de verrouillage 21 et le corps annulaire 20 permettant la déformation des pattes de verrouillage 21 lors de l'insertion de la bague de retenue 2 sur l'embase 3 pour limiter l'encombrement du dispositif, sans perdre le guidage et la retenue de l'embout 1 sur la bague de retenue 2. Dans l'exemple représenté sur les figures, l'extrémité libre 21a de chaque patte de verrouillage 21 est munie, sur sa surface interne, d'un ergot de verrouillage 26 pour coopérer avec le collet 31. L'ergot de verrouillage 26 possède avantageusement un plan incliné 26' pour faciliter le clippage de la bague de retenue 2 sur l'embase 3.

Le corps annulaire 20 comprend au moins un deuxième élément de retenue 22,22' ; avantageusement, il comprend deux deuxièmes éléments de retenue 22 pour coopérer avec les premiers éléments de retenue 11 de l'embout de connexion 1, et solidariser la bague de retenue 2 sur l'embout de connexion 1 (figure 4b). Les deuxièmes éléments de retenue 22 sont angulairement espacés de 90° avec les pattes de verrouillage 21. Ce positionnement angulaire particulier permet de renforcer la résistance à l'arrachement entre la bague de retenue 2 et l'embase 3. En effet, lorsqu'une force est appliquée pour arracher axialement la bague de retenue 2, par un liquide circulant dans le conduit par exemple, cette force provoque, par un jeu de mouvement antagoniste, le rapprochement des pattes de verrouillage 21 sur l'embase 3 et l'écartement des premiers éléments de retenue 11. Ce rapprochement améliore la prise de la bague de retenue 2 sur l'embase 3 et donc sa résistance à l'arrachement. L'écartement des bras flexibles 11 vis-à-vis du corps tubulaire 10 renforce en outre leur accroche avec les deuxièmes éléments de retenue 22, et donc la tenue mécanique entre l'embout de connexion 1 et la bague de retenue 2.

Sur l'exemple illustré notamment sur les figures 1a à 1d, les deuxièmes éléments de retenue 22 sont des épaulements 22 formés sur la surface interne de la bague de retenue 2 mais on pourrait imaginer d'autres configurations. Optionnellement, le corps annulaire 20 peut comprendre une cavité ou lumière 22'' pour accueillir l'ergot 12 des bras flexibles 11 lorsque la bague de retenue 2 est assemblée à l'embout de connexion 1, comme cela est visible sur la figure 2.

Dans le dispositif de raccordement 100 selon l'invention, les connexions entre l'embout 1 et la bague de retenue 2, et entre la bague de retenue 2 et l'embase 3, sont faites dans des espaces intérieurs de la bague de retenue 2. La déconnexion entre l'embout 1 et la bague 2 (fixée à l'embase 3) peut être réalisée sans augmenter le volume d'encombrement du dispositif de raccordement 100, le volume d'encombrement au niveau de l'interface de connexion étant sensiblement définie par les contours extérieurs de la bague de retenue 2. La déconnexion entre la bague de retenue 2 et l'embase 3 peut être effectuée sans augmenter significativement le volume d'encombrement, en écartant vers l'extérieur la (ou les) patte(s) de verrouillage 21.

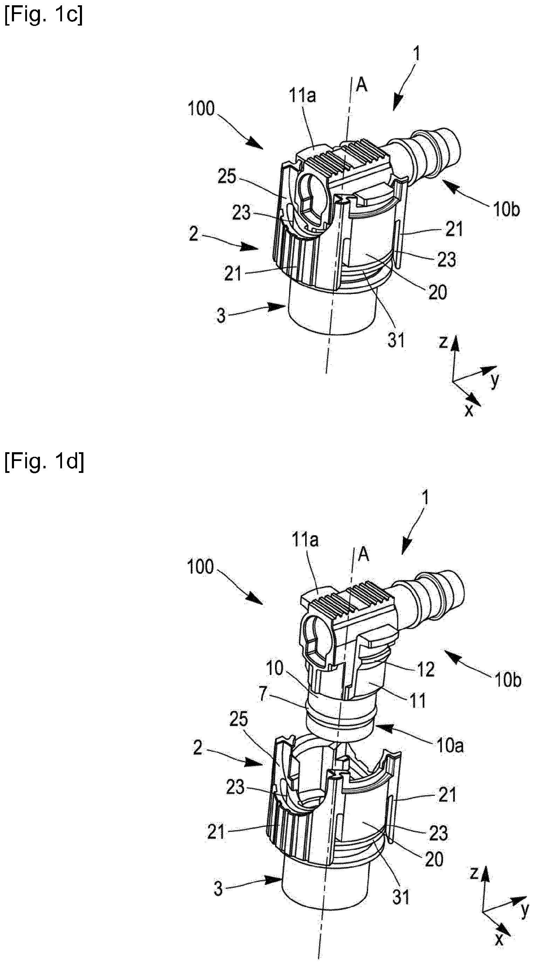

Dans les exemples illustrés par les figures 1 à 5, les premiers éléments de retenues 11 sont flexibles et les deuxièmes éléments de retenues 22 sont rigides. Il est bien évidemment possible, selon un mode de réalisation alternatif de l'invention illustré sur la figure 6, de réaliser l'inverse, à savoir des premiers éléments de retenues rigides 11' et des deuxièmes éléments de retenues 22' flexibles. Par exemple, comme cela est visible sur la figure 6, les premiers éléments de retenues 11' peuvent être un épaulement 11' formé sur la surface externe de l'embout de connexion 1, et les deuxièmes éléments de retenues 22' des bras flexibles 22', comprenant un ergot sur leur surface interne, formés sur la bague de retenue 2.

Dans la suite de la description, on ne considérera que le mode de réalisation des figures 1 à 5, la description pouvant être facilement adaptée au mode de réalisation alternatif susmentionné.

Avantageusement, la bague de retenue 2 comprend des évidements détrompeurs 25 pour orienter l'embout de connexion 1 par rapport à la bague de retenue 2 lors de leur assemblage et assurer l'alignement des premiers éléments de retenues 11 et des deuxièmes éléments de retenue 22.

De manière optionnelle, le dispositif de raccordement 100 peut également comporter une pièce de blocage 4 destinée à être insérée entre le corps tubulaire 10 et le bras flexible 11 pour combler l'espace libre 14 et bloquer le rapprochement des bras flexibles 11. Cette pièce de blocage 4 est notamment utilisée pour prévenir les déconnexions accidentelles susceptibles de se produire en cours de montage via des chocs, ou en cours d'utilisation à cause de profils vibratoires extrêmement sévères dans des espaces confinés. En effet, selon l'intensité des fréquences des vibrations, des mouvements relatifs entre les éléments du dispositif de raccordement 100 peuvent s'opérer. Ce phénomène, combiné à la circulation d'un fluide dans le dispositif 100, peut présenter des risques de déconnexion. Il peut ainsi être souhaitable, dans ce cas particulier de conditions extrêmes, de sécuriser la tenue des bras flexibles 11 sur la bague de retenue 2.

Les figures 3a et 3b illustrent une pièce de blocage 4, respectivement seule et assemblée au dispositif de raccordement 100.

La pièce de blocage 4 présente une forme de cavalier en U comprenant une branche de blocage 40, une branche de fixation 41 ainsi qu'une branche d'appui 42, formée dans le prolongement de la branche de fixation 41. La branche de blocage 40 est destinée à être insérée entre le bras flexible 11 et le corps tubulaire 10 pour combler l'espace libre 14. La branche de fixation 41 est munie sur sa face interne d'un ergot de fixation 43 pour se clipper sur l'extrémité libre 11a du bras flexible 11. L'ergot de fixation 43 peut bien évidemment se clipper sur une autre partie du bras flexible 11 tel qu'une ouverture ou cavité formée à cet effet, ou encore se clipper sur la bague de retenue 2. La branche d'appui 42 est destinée à déclipper, par appui, la branche de fixation 41 du bras flexible 11.

Le blocage d'un seul bras flexible 11 est suffisant pour empêcher le retrait de l'embout de connexion 1 de la bague de retenue 2. Néanmoins, on peut prévoir d'utiliser deux éléments de blocage 4 pour bloquer les deux bras flexibles 11, ou d'employer un élément de blocage 4 ayant une géométrie permettant le blocage simultané des deux bras 11.

Par ailleurs, et toujours de manière optionnelle, la bague de retenue 2 peut être munie d'une extension 5. Cette extension 5 sert d'intermédiaire entre la bague de retenue 2 et l'embout de connexion 1, comme cela est visible sur le dispositif de raccordement 100c de la figure 2, pour délocaliser la jonction entre l'embout de connexion 1 et la bague de retenue 2 ; une telle configuration permet notamment de tenir compte de contraintes d'encombrement et/ou d'accessibilité. L'extension 5 possède une première et une deuxième extrémité 5a, 5b. La première extrémité 5a permet de raccorder l'extension 5 à la bague de retenue 2 et comprend, similairement à l'embout de connexion 1, des premiers éléments de retenues 51, ici des bras flexibles 51. Ces bras flexibles 51 possèdent les mêmes propriétés et fonctionnent de la même façon que les bras flexibles 11 de l'embout de connexion 1. La deuxième extrémité 5b permet de raccorder l'extension 5 à l'embout de connexion 1 et comprend, similairement à bague de retenue 2, des deuxièmes éléments de retenue 52. Ces deuxièmes éléments de retenue 52 possèdent les mêmes propriétés et fonctionnent de la même façon que ceux de la bague de retenue 2.

De manière avantageuse, le dispositif de raccordement 100 peut être muni d'un témoin visuel de bon montage 6 (figure 5).

Le témoin visuel de bon montage 6 est une pièce mobile disposée entre la bague de retenue 2 et l'embout de connexion 1 dont une partie 61a devient visible, ici à travers des lumières 27 formées sur la bague de retenue 2, lorsque le dispositif de raccordement 100 est correctement assemblé sur l'embase 3. Il peut s'agir d'une bague 60 munie de deux montants verticaux 61 s'étendant axialement selon l'axe principal A et comportant chacun une extrémité libre 61a comme cela est représentée sur la figure 5.

### Mise en oeuvre du dispositif de raccordement

Une étape de pré-assemblage est nécessaire avant de pouvoir utiliser le dispositif de raccordement 100. Cette étape permet d'assembler, et de maintenir assemblée, la bague de retenue 2 à l'embout de connexion 1 pour former le dispositif de raccordement 100 (figures 1a, 1b).

L'embout de connexion 1 est préalablement orienté par rapport à la bague de retenue 2 afin de faire coïncider la ou les deuxième(s) extrémité(s) 10b de l'embout de connexion 1 avec les évidements détrompeurs 25 de la bague de retenue 2. Cette orientation particulière permet d'aligner les deuxièmes éléments de retenue 22 de la bague de retenue 2 avec les ergots 12 de l'embout de connexion 1.

Une pression est ensuite exercée sur l'embout de connexion 1 pour l'assembler à la bague de retenue 2. Lors de l'insertion de l'embout de connexion 1 à travers la bague de retenue 2, le plan incliné 12a des ergots 12 des bras flexibles 11 vient en contact contre la bague de retenue 2 et guide le rapprochement des bras 11 contre le corps tubulaire 10. Ce rapprochement permet le passage des ergots 12 dans la bague de retenue 2 afin qu'ils puissent se clipper sur les deuxièmes éléments de retenue 22 de la bague de retenue 2.

A l'issue de cette étape de pré-assemblage, le dispositif de raccordement 100 se trouve dans l'état illustré par la figure 1b et la bague de retenue 2 est maintenue assemblée à l'embout de connexion 1.

Selon une variante de l'invention, une extension 5 peut être assemblée lors de cette étape entre la bague de retenue 2 et l'embout de connexion 1. La première extrémité 10a de l'embout de connexion 1 est insérée à travers la deuxième extrémité 5b de l'extension 5, en alignant les deuxième éléments de retenue 52 de l'extension 5 avec les ergots 12 de l'embout de connexion 1, pour retenir l'embout de connexion 1 assemblé à l'extension 5. La première extrémité 5a de l'extension 5 est ensuite insérée dans la bague de retenue 2. Les bras flexibles 51 de l'extension 5 se déforment puis se clippent à la bague de retenue 2 similairement aux bras flexibles 11 de l'embout de connexion 1. Le dispositif de raccordement 100 se retrouve, à l'issue de cette variante, dans l'état illustré par le dispositif 100c de la figure 2.

Optionnellement, après l'étape de pré-assemblage, on peut insérer une pièce de blocage 4 sur l'un des bras flexibles 11,51 pour bloquer son mouvement et empêcher le désassemblage du dispositif de raccordement 100 (figure 3b). La branche de blocage 40 est insérée entre le bras flexible 11 et le corps tubulaire 10, pour combler l'espace libre 14 ; l'ergot de fixation 43 de la branche de fixation 41 se clippe sur l'extrémité libre 11a du bras flexible 11, pour maintenir l'élément de blocage 4 assemblé au bras flexible 11.

Une fois l'étape de pré-assemblage réalisée, le dispositif de raccordement 100 est ensuite emboité dans le segment tubulaire 30 de l'embase 3, lors d'une étape d'assemblage (figure 1c).

La première extrémité 10a de l'embout de connexion 1 est engagée dans l'embase 3 jusqu'à ce que les pattes de verrouillage 21 de la bague de retenue 2 viennent en contact contre le collet 31. Le plan incliné 26' des ergots de verrouillage 26 vient en contact contre le collet 31 et guide l'écartement radial des pattes de verrouillage 21 jusqu'au clippage des ergots de verrouillage 26 sur le collet 31 qui assure la solidarisation de la bague de retenue 2 à l'embase 3.

A l'issue de cette étape d'assemblage, le dispositif de raccordement 100 se trouve dans l'état illustré par les figures 4a,4b et 1c et le dispositif de raccordement 100 est maintenu assemblé à l'embase 3.

Selon une autre variante, le dispositif de raccordement 100 comprend un témoin visuel de bon montage 6. Le témoin 6 est avantageusement maintenu assemblé à la bague de retenue 2, par exemple, grâce aux pattes de verrouillage 21, la bague 60 reposant sur les ergots de verroullage 26. Lors de l'insertion du dispositif de raccordement 100, le collet 31 de l'embase 3 vient en contact contre la bague 60 du témoin 6. Ce contact provoque le coulissement axial et/ou radial du témoin 6, au sein du dispositif de raccordement 100, jusqu'à ce qu'il occupe une position finale lorsque le dispositif de raccordement 100 est correctement raccordé à l'embase 3. Dans cette position finale, l'extrémité libre 61a des montants verticaux 61 du témoin 6 affleure la surface supérieure de la bague de retenue 2, par exemple à travers une lumière 27, et donne ainsi une indication visuelle de bon montage.

Une fois le dispositif de raccordement 100 assemblé à l'embase 3, il demeure possible de déconnecter l'embout de connexion 1 de l'embase 3. Pour réaliser cela, il est nécessaire de retirer au préalable la pièce de blocage 4, si elle est présente, par appui manuel ou grâce à un outil, sur la branche d'appui 42, de manière à provoquer l'écartement de la branche de fixation 41 et désengager l'ergot de fixation 43 de l'extrémité 11a du bras flexible 11. On peut ensuite venir prendre appui sur l'extrémité 11a des bras flexible 11, manuellement ou via divers outils, pour rapprocher radialement les bras flexibles 11 l'un de l'autre. Ce rapprochement permet de désengager les ergots 12 des éléments de retenue ou épaulements 22. L'embout de connexion 1 n'étant alors plus clippé à la bague de retenue 2, il est possible de le retirer tout en laissant la bague de retenue 2 assemblée à l'embase 3 (figure 1d). Il est ainsi possible de déconnecter facilement l'embout de connexion 1 et/ou d'inter-changer des embouts de connexion 1, sans retirer la bague de retenue 2.

Lors de cette déconnexion, il est important de noter que le volume du dispositif de raccordement 100 n'augmente pas, la déformation nécessaire pour réaliser la déconnexion se réalisant au sein du volume déjà occupé par le dispositif de raccordement 100. La déconnexion est possible sans impacter la compacité du dispositif de raccordement, ce qui est un avantage important notamment lorsque le dispositif de raccordement 100 est disposé dans un espace exigu.

De plus, la déconnexion est réalisée en interagissant avec la partie haute du dispositif de raccordement 100, par le biais des extrémités libres 11a des bras flexibles 11, ce qui permet de faciliter le déverrouillage, les extrémités libres 11a étant facilement accessibles et la manipulation nécessitant un espace de travail réduit.

Il est également possible, à la suite du retrait de l'embout de connexion 1 de la bague de retenue 2, de déconnecter la bague de retenue 2 de l'embase 3. Un outil peut être inséré dans l'espace libre 23 pour exercer une pression sur la patte de verrouillage 21 afin de désengager les ergots de verrouillage 26 du collet 31, ce qui permet de retirer la bague de retenue 2. On peut également réaliser cette déconnexion manuellement, en écartant l'extrémité libre des pattes de verrouillage 21 ou en apuyant sur la partie supérieure des pattes de verrouillage 21, proche des éléments détrompeurs 25, pour désengager par bascule les ergots de verrouillage 26 du collet 31.

Bien entendu l'invention n'est pas limitée aux modes de mise en oeuvre décrits et on peut y apporter des variantes de réalisation sans sortir du cadre de l'invention tel que défini par les revendications.

## Revendications

1. Dispositif de raccordement (100) entre au moins un conduit et une embase (3) présentant un segment tubulaire (30) surmonté d'un collet (31), le dispositif de raccordement (100) comportant un embout de connexion (1) destiné à relier fluidiquement le conduit à l'embase (3) et une bague de retenue (2) destiné à maintenir assemblé l'embout de connexion (1) à l'embase (3) :
- l'embout de connexion (1) comprenant :
• un corps tubulaire (10) dont une première extrémité (10a) est destinée à s'engager, selon un axe principal (A), dans le segment tubulaire (30) de l'embase (3), et dont une deuxième extrémité (10b) est destinée à se connecter au conduit ;
• deux premiers éléments de retenue (11,11') disposés en vis-à-vis l'un de l'autre ;
- la bague de retenue (2) comprenant :
• un corps annulaire (20) muni de deux deuxièmes éléments de retenue (22,22') coopérant avec les premiers éléments de retenue (11,11') pour retenir la bague de retenue (2) sur l'embout de connexion (1) ;
• deux pattes de verrouillage (21) solidaires du corps annulaire (20) s'étendant selon l'axe principal (A), pour s'agripper au collet (31) et maintenir la bague de retenue (2) assemblée à l'embase (3),
les deuxièmes éléments de retenue (22,22') et les pattes de verrouillage (21) étant angulairement espacés de 90°.

2. Dispositif de raccordement (100) selon la revendication précédente, dans lequel la bague de retenue (2) comprend des évidements détrompeurs (25) pour orienter l'embout de connexion (1) par rapport à la bague de retenue (2), lors de leur assemblage, et assurer l'alignement des premiers éléments de retenue (11,11') et des deuxièmes éléments de retenue (22,22').

3. Dispositif de raccordement (100) selon l'une des revendications précédentes, dans lequel chaque premier élément de retenue (11) est flexible et chaque deuxième élément de retenue (22) est rigide.

4. Dispositif de raccordement (100) selon la revendication précédente, dans lequel chaque premier élément de retenue (11) est un bras flexible (11) relié au corps tubulaire (10) du côté de sa première extrémité (10a) et s'étendant le long du corps tubulaire (10), le bras flexible (11) comprenant sur une surface extérieure un ergot (12) coopérant avec le deuxième élément de retenue (22).

5. Dispositif de raccordement (100) selon l'une des revendications 3 à 4, dans lequel chaque deuxième élément de retenue (22) est un épaulement (22) formé sur une surface interne du corps annulaire (20).

6. Dispositif de raccordement (100) selon l'une des revendications 1 à 2, dans lequel chaque premier élément de retenue (11') est rigide et chaque deuxième élément de retenue (22') est flexible.

7. Dispositif de raccordement (100) selon la revendication précédente, dans lequel chaque deuxième élément de retenue (22') est un bras flexible (22') formé sur la bague de retenue (2), le bras flexible (22') comprenant sur une surface interne un ergot coopérant avec le premier élément de retenue (11').

8. Dispositif de raccordement (100) selon l'une des revendications 6 à 7, dans lequel chaque premier élément de retenue (11') est un épaulement (11') formé sur une surface externe du corps tubulaire (10).

9. Dispositif de raccordement (100) selon l'une des revendications 4 à 5, comportant également une pièce de blocage (4) destinée à être insérée entre le corps tubulaire (10) et le bras flexible (11).

10. Dispositif de raccordement (100) selon la revendication précédente, dans lequel la pièce de blocage (4) présente une forme de cavalier en U comprenant :
- une branche de blocage (40) destinée à être insérée entre le bras flexible (11) et le corps tubulaire (10) ;
- une branche de fixation (41) munie d'un ergot de fixation (43) pour se clipper sur le bras flexible (11).

11. Dispositif de raccordement (100) selon la revendication précédente, dans lequel la pièce de blocage (4) comprend une branche d'appui (42) formée dans le prolongement de la branche de fixation(41) et destinée à déclipper, par appui, la branche de fixation (41) du bras flexible (11).

12. Dispositif de raccordement (100) selon l'une des revendication précédentes, dans lequel la bague de retenue (2) est munie d'une extension (5) comprenant :
- une première extrémité (5a) pour raccorder l'extension (5) à la bague de retenue (2), la première extrémité (5a) comprenant un premier élément de retenue (51) identique à celui de l'embout de connexion (1) ;
- une deuxième extrémité (5b) pour raccorder l'extension (5) à l'embout de connexion (1), la deuxième extrémité (5b) comprenant un deuxième élément de retenue (52) identique à celui de la bague de retenue (2).

13. Dispositif de raccordement (100) selon l'une des revendications précédentes, comportant également un témoin visuel de bon montage (6) mobile disposé entre la bague de retenue (2) et l'embout de connexion (1), le témoin visuel de bon montage (6) étant susceptible de coulisser axialement et/ou radialement lorsqu'il vient en contact contre le collet (31) pour rendre visible une portion (61a) du témoin visuel de bon montage (6) lorsque le dispositif de raccordement (100) est correctement assemblé à l'embase (3).

14. Dispositif de raccordement (100) selon la revendication précédente, dans lequel le témoin visuel de bon montage (6) est une bague (60) munie de deux montants verticaux (61) s'étendant axialement selon l'axe principal (A) et comportant chacun une extrémité libre (61a) susceptible d'être exposée à travers une lumière (27) formée dans la bague de retenue (2) .

## Patentansprüche

1. Verbindungsvorrichtung (100) zwischen mindestens einer Leitung und einer Basis (3), die ein rohrförmiges Segment (30) vorweist, das durch einen Rand (31) überragt wird, wobei die Verbindungsvorrichtung (100) ein Anschlussende (1), das zum fluidischen Verbinden der Leitung an der Basis (3) bestimmt ist, und einen Sicherungsring (2) aufweist, der dafür bestimmt ist, das Anschlussende (1) an der Basis (3) montiert zu halten:
- das Anschlussende (1) umfassend:
• einen rohrförmigen Körper (10), von dem ein erstes Ende (10a) zum Ineingriffnehmen, entlang einer Hauptachse (A), des rohrförmigen Segments (30) der Basis (3) bestimmt ist, und von dem ein zweites Ende (10b) dafür bestimmt ist, sich mit der Leitung zu verbinden;
• zwei einander gegenüberliegend angeordnete erste Sicherungselemente (11,11');
- der Sicherungsring (2) umfassend:
• einen ringförmigen Körper (20), der mit zwei zweiten Sicherungselementen (22,22') versehen ist, die mit den ersten Sicherungselementen (11,11') zusammenwirken, um den Sicherungsring (2) an dem Anschlussende (1) zu sichern;
• zwei Verriegelungslaschen (21), die mit dem ringförmigen Körper (20) fest verbunden sind, die sich entlang der Hauptachse (A) erstrecken, um den Rand (31) zu greifen und den Sicherungsring (2) an der Basis (3) montiert zu halten,
wobei die zweiten Sicherungselemente (22,22') und die Verriegelungslaschen (21) in einem Winkel von 90° beabstandet sind.

2. Verbindungsvorrichtung (100) nach dem vorstehenden Anspruch, wobei der Sicherungsring (2) Steckvertiefungen (25) umfasst, um das Anschlussende (1) relativ zu dem Sicherungsring (2) während deren Montage auszurichten und die Einstellung der ersten Sicherungselemente (11,11') und der zweiten Sicherungselemente (22,22') sicherzustellen.

3. Verbindungsvorrichtung (100) nach einem der vorstehenden Ansprüche, wobei jedes erste Sicherungselement (11) biegsam ist und jedes zweite Sicherungselement (22) starr ist.

4. Verbindungsvorrichtung (100) nach dem vorstehenden Anspruch, wobei jedes erste Sicherungselement (11) ein biegsamer Arm (11) ist, der auf der Seite seines ersten Endes (10a) mit dem rohrförmigen Körper (10) verbunden ist und sich entlang des rohrförmigen Körpers (10) erstreckt, wobei der biegsame Arm (11) an einer Außenoberfläche einen Ansatz (12), der mit dem zweiten Sicherungselement (22) zusammenwirkt, umfasst.

5. Verbindungsvorrichtung (100) nach einem der Ansprüche 3 bis 4, wobei jedes zweite Sicherungselement (22) ein an einer Innenoberfläche des Ringkörpers (20) ausgebildeter Absatz (22) ist.

6. Verbindungsvorrichtung (100) nach einem der Ansprüche 1 bis 2, wobei jedes erste Sicherungselement (11') starr ist und jedes zweite Sicherungselement (22') biegsam ist.

7. Verbindungsvorrichtung (100) nach dem vorstehenden Anspruch, wobei jedes zweite Sicherungselement (22') ein biegsamer Arm (22') ist, der an dem Sicherungsring (2) ausgebildet ist, wobei der biegsame Arm (22') an einer Innenoberfläche einen mit dem ersten Sicherungselement (11') zusammenwirkenden Ansatz umfasst.

8. Verbindungsvorrichtung (100) nach einem der Ansprüche 6 bis 7, wobei jedes erste Sicherungselement (11') ein Absatz (11') ist, der an einer Außenoberfläche des rohrförmigen Körpers (10) ausgebildet ist.

9. Verbindungsvorrichtung (100) nach einem der Ansprüche 4 bis 5, ferner aufweisend ein Blockierteil (4), das dafür bestimmt ist, zwischen dem rohrförmigen Körper (10) und dem biegsamen Arm (11) eingesetzt zu werden.

10. Verbindungsvorrichtung (100) nach dem vorstehenden Anspruch, wobei das Blockierteil (4) eine Form einer U-förmigen Klammer vorweist, aufweisend:
- einen Blockierschenkel (40), der dafür bestimmt ist, zwischen dem biegsamen Arm (11) und dem rohrförmigen Körper (10) eingesetzt zu werden;
- einen Befestigungsschenkel (41), der mit einem Befestigungsansatz (43) zum Befestigen an dem biegsamen Arm (11) versehen ist.

11. Verbindungsvorrichtung (100) nach dem vorstehenden Anspruch, wobei das Blockierteil (4) einen Auflageschenkel (42) umfasst, der in der Verlängerung des Befestigungsschenkels (41) ausgebildet ist und dafür bestimmt ist, den Befestigungsschenkel (41) durch Auflegen von dem biegsamen Arm (11) zu lösen.

12. Verbindungsvorrichtung (100) nach einem der vorstehenden Ansprüche, wobei der Sicherungsring (2) mit einer Verlängerung (5) versehen ist, umfassend:
- ein erstes Ende (5a) zum Verbinden der Verlängerung (5) mit dem Sicherungsring (2), wobei das erste Ende (5a) ein erstes Sicherungselement (51) umfasst, das mit dem des Anschlussendes (1) identisch ist;
- ein zweites Ende (5b) zum Verbinden der Verlängerung (5) mit dem Anschlussende (1), wobei das zweite Ende (5b) ein zweites Sicherungselement (52) umfasst, das mit dem des Sicherungsrings (2) identisch ist.

13. Verbindungsvorrichtung (100) nach einem der vorstehenden Ansprüche, ebenso aufweisend einen bewegbaren optischen Indikator (6) für einen guten Aufbau, der zwischen dem Sicherungsring (2) und dem Anschlussende (1) angeordnet ist, wobei der visuelle Indikator (6) für den guten Aufbau axial und/oder radial verschiebbar ist, wenn er mit dem Rand (31) in Kontakt kommt, um einen Teil (61a) des visuellen Indikators (6) für den guten Aufbau sichtbar zu machen, wenn die Verbindungsvorrichtung (100) an der Basis (3) korrekt montiert ist.

14. Verbindungsvorrichtung (100) nach dem vorstehenden Anspruch, wobei der visuelle Indikator (6) für den guten Aufbau ein Ring (60) ist, der mit zwei vertikalen Stützen (61) versehen ist, die sich axial entlang der Hauptachse (A) erstrecken und jeweils ein freies Ende (61a) aufweisen, das durch eine in dem Sicherungsring (2) ausgebildete Öffnung (27) freilegbar ist.

## Claims

1. A device (100) for coupling at least one pipe and a base (3) having a tubular segment (30) on which a collar (31) is mounted, the coupling device (100) comprising a connection end piece (1) for fluidically connecting the pipe to the base (3) and a retaining ring (2) for keeping the connection end piece (1) attached to the base (3):
- the connection end piece (1) comprising:
• a tubular body (10), of which a first end (10a) is intended to be inserted into the tubular segment (30) of the base (3) along a main axis (A), and of which a second end (10b) is intended to connect to the pipe;
• two first retaining elements (11, 11') arranged opposite one another;
- the retaining ring (2) comprising:
• an annular body (20) provided with two second retaining elements (22, 22') which cooperate with the first retaining elements (11, 11') to retain the retaining ring (2) on the connection end piece (1);
• two locking tabs (21) which are rigidly connected to the annular body (20) and extend along the main axis (A) for gripping the collar (31) and keeping the retaining ring (2) attached to the base (3),
the second retaining elements (22, 22') and the locking tabs (21) being angularly spaced at 90°.

2. The coupling device (100) according to the preceding claim, wherein the retaining ring (2) comprises keying recesses (25) for orienting the connection end piece (1) relative to the retaining ring (2) during their assembly, and ensuring the alignment of the first retaining elements (11, 11') and the second retaining elements (22, 22').

3. The coupling device (100) according to any of the preceding claims, wherein each first retaining element (11) is flexible and each second retaining element (22) is rigid.

4. The coupling device (100) according to the preceding claim, wherein each first retaining element (11) is a flexible arm (11) that is connected to the tubular body (10) at the first end (10a) thereof and extends along the tubular body (10), the flexible arm (11) comprising, on an outer surface, a lug (12) which cooperates with the second retaining element (22).

5. The coupling device (100) according to either claim 3 or claim 4, wherein each second retaining element (22) is a shoulder (22) formed on an internal surface of the annular body (20).

6. The coupling device (100) according to either claim 1 or claim 2, wherein each first retaining element (11') is rigid and each second retaining element (22') is flexible.

7. The coupling device (100) according to the preceding claim, wherein each second retaining element (22') is a flexible arm (22') formed on the retaining ring (2), the flexible arm (22') comprising, on an internal surface, a lug which cooperates with the first retaining element (11').

8. The coupling device (100) according to either claim 6 or claim 7, wherein each first retaining element (11') is a shoulder (11') formed on an external surface of the tubular body (10).

9. The coupling device (100) according to either claim 4 or claim 5, also comprising an immobilizing part (4) intended to be inserted between the tubular body (10) and the flexible arm (11).

10. The coupling device (100) according to the preceding claim, wherein the immobilizing part (4) is in the shape of a U-shaped staple comprising:
- an immobilizing leg (40) intended to be inserted between the flexible arm (11) and the tubular body (10);
- an attachment leg (41) provided with an attachment lug (43) for clipping onto the flexible arm (11).

11. The coupling device (100) according to the preceding claim, wherein the immobilizing part (4) comprises a pressure leg (42) which is formed in the extension of the attachment leg (41) and is intended to unclip, by means of pressure, the attachment leg (41) from the flexible arm (11).

12. The coupling device (100) according to any of the preceding claims, wherein the retaining ring (2) is provided with an extension (5), comprising:
- a first end (5a) for coupling the extension (5) to the retaining ring (2), the first end (5a) comprising a first retaining element (51) identical to that of the connection end piece (1);
- a second end (5b) for coupling the extension (5) to the connection end piece (1), the second end (5b) comprising a second retaining element (52) identical to that of the retaining ring (2).

13. The coupling device (100) according to any of the preceding claims, also comprising a movable visual indicator of proper assembly (6) arranged between the retaining ring (2) and the connection end piece (1), the visual indicator of proper assembly (6) being capable of sliding axially and/or radially when it comes into contact with the collar (31) to make a portion (61a) of the visual indicator of proper assembly (6) visible when the coupling device (100) is correctly attached to the base (3).

14. The coupling device (100) according to the preceding claim, wherein the visual indicator of proper assembly (6) is a ring (60) provided with two vertical uprights (61) which extend axially along the main axis (A) and each comprise a free end (61a) capable of being exposed through a slot (27) formed in the retaining ring (2).
